Europäisches Patentamt

European Patent Office

Office européen des brevets

(11) Veröffentlichungsnummer: **0 271 756**
**A1**

(12) **EUROPÄISCHE PATENTANMELDUNG**

(21) Anmeldenummer: 87117633.5

(22) Anmeldetag: 28.11.87

(51) Int. Cl.4: **A01B 41/04**

(30) Priorität: 02.12.86 DE 3641143

(43) Veröffentlichungstag der Anmeldung:
22.06.88 Patentblatt 88/25

(84) Benannte Vertragsstaaten:
AT BE CH FR GB IT LI NL SE

(71) Anmelder: **Ulbrich, Christoph**
**Am Stadion 32**
**D-2060 Bad Oldesloe(DE)**

(72) Erfinder: **Ulbrich, Christoph**
**Am Stadion 32**
**D-2060 Bad Oldesloe(DE)**

(74) Vertreter: **Wilcken, Thomas, Dipl.-Ing. et al**
**Musterbahn 1**
**D-2400 Lübeck(DE)**

(54) **Hackmaschine für Hackfrüchte.**

(57) Die gezogene, von Laufrädern abgestützte Hackmaschine mit im Abstand hintereinander auf lotrechten, angetriebenen Wellen (8) versehenen Hackmessern (9) ist so ausgebildet, daß durch einen auf dem Maschinenrahmen (2) montierten Ölmotor (3) über ein Schaltgetriebe die beiden gegenläufig drehenden Wellen mit ihren Hackmessern und ein erstes Tellerrad (15) eines Differenzialgetriebes (14) antreibbar sind und daß das gegenüberliegende zweite Tellerrad (16) des Differentialgetriebes mit umgekehrter gleicher Drehzahl von den Laufrädern (1) antreibbar ist, wobei die Ausgleichsräder (18,19) des Getriebes (14) bei einer von außen aufgezwungenen Drehzahländerung eines der beiden Tellerräder die Öffnungsweite eines im Ölkreislauf des Motors (3) liegenden Regelventils (13) steuern.

Fig. 1

EP 0 271 756 A1

## Hackmaschine für Hackfrüchte

Hackfrüchte, wie Rüben, Salat, Kohl oder dergleichen, stehen auf Feldern in parallelen Pflanzreihen mit bestimmten Abständen in den Reihen. Um die Hackfrüchte sauberzuhalten, müssen die wachsenden Unkräuter durch Hackmaschinen oder durch Spritzen zwischen den Reihen und zwischen den Pflanzen in den Reihen entfernt werden.

Die Unkrautvernichtung durch Spritzmittel ist mit verhältnismäßig niedrigen Kosten für den Landwirt durchzuführen, hat aber den Nachteil, daß der Boden stark belastet wird und daß eine Bodenbelüftung durch Bodenlockerung unterbleibt, was sich ungünstig auf das Wachstum der Pflanzen auswirkt.

Das Entfernen von Unkräutern durch zwischen den Reihen in Längsrichtung laufende Hackmesser von durch Schlepper gezogenen Hackmaschinen ist einfach durchzuführen. Es ist auch bekannt, die teure Handarbeit beim Hacken quer zur Längsrichtung zwischen den Pflanzen durch Hackmaschinen zu ersetzen, deren Hackmesser quer in den Reihen zwischen den Pflanzen arbeiten, wobei es jedoch schwierig ist, die von den Stützrädern der Maschine angetriebenen Hackmesser stets genau zwischen den Pflanzen hindurcharbeiten zu lassen, so daß die querarbeitenden Hackmesser Pflanzen weghacken (FR-PS 967 149). Man hat daher Hackmaschinen schon mit optischen Sensoren zum Abtasten der Pflanzen ausgerüstet und die Abtastung zum elektronischen Steuern der Hackmaschine verwendet. Solche Maschinen sind sehr kostspielig und in der rauhen, landwirtschaftlichen Praxis nicht zuverlässig.

Gegenüber den vorerwähnten Hackmaschinen geht die Erfindung von Hackmaschinen nach der DE-AS 1 262 661 aus. Bei dieser Hackmaschine werden die rotierenden, paarweise auf lotrechten Wellen sitzenden Hackmesser von einem unabhängigen Ölmotor angetrieben, in dessen Ölkreislauf ein Steuerventil liegt, dessen Öffnungsweite durch einen von den Laufrädern der Hackmaschine angetriebenen Regler in Abhängigkeit von der Fahrgeschwindigkeit gesteuert wird. Wenn sich nun die Drehzahl der Hackmesser durch unterschiedliche Bodenverhältnisse, wie Unebenheiten, Bodenverdichtungen, Steine, verschieden starker Unkrautbesatz usw. ändert, so führt dies bei der bekannten Hackmaschine dazu, daß sich das Verhältnis Fahrgeschwindigkeit zur Drehzahl der Hackmesser ändert, das heißt die Hackmesser laufen je nach Bodenverhältnis gegenüber dem eingestellten Verhältnis schneller oder langsamer. Damit ist sodann kein richtiges Auslichten in den Pflanzenreihen mehr möglich. Es fehlt also bei der bekannten Hackmaschine nach der DE-AS 1 262 661 die Rückkopplung, das heißt das Ausgleichen der Messerdrehzahl an die Fahrgeschwindigkeit.

Die Aufgabe der Erfindung besteht nun daher darin, die quer zu den Pflanzenreihen arbeitenden Hackmesser der Hackmaschine nicht nur an die Vorwärtsbewegung der Hackmaschine anzupassen, sondern auch Drehzahländerungen der Hackmesser durch unterschiedliche Bodenverhältnisse oder dergleichen auszugleichen.

Diese Aufgabe wird nach der Erfindung durch die kennzeichnenden Merkmale des Anspruches 1 gelöst.

Weitere vorteilhafte Merkmale der Erfindung ergeben sich aus den Ansprüchen 2 bis 5.

Durch die Erfindung ergibt sich, daß bei unterschiedlicher Belastung der Hackmesser infolge unterschiedlicher Bodenverhältnisse oder dergleichen die Antriebsleistung der Hackmesser sich diesen Verhältnissen automatisch anpaßt, da die höhere oder sinkende Belastung der Hackmesser das erste vom Ölmotor angetriebene Tellerrad des Differenzialgetriebes in der Drehzahl von der Drehzahl des zweiten von den Laufrädern angetriebenen Tellerrades kurzzeitig abweicht, so daß dann die Achse der beiden Ausgleichsräder mit der Achse der beiden Tellerräder eine Verdrehung um einen entsprechenden Winkel ausführt, womit das mit dem Regelventil verbundene Kettenrad eine Winkeldrehung ausführt und damit das Regelventil mehr oder weniger öffnet. Dadurch wird dann dem Ölmotor entsprechend geregelt mehr oder weniger Drucköl zugeführt, daß die Drehzahl des Ölmotors bei erhöter oder herabgesetzter Leistung seine ursprüngliche Drehzahl wieder annimmt.

Die Erfindung wird nachstehend anhand der schematischen Zeichnung beispielsweise erläutert. Es zeigen:

Figur 1 eine Aufsicht auf die Hackmaschine nach der Erfindung,

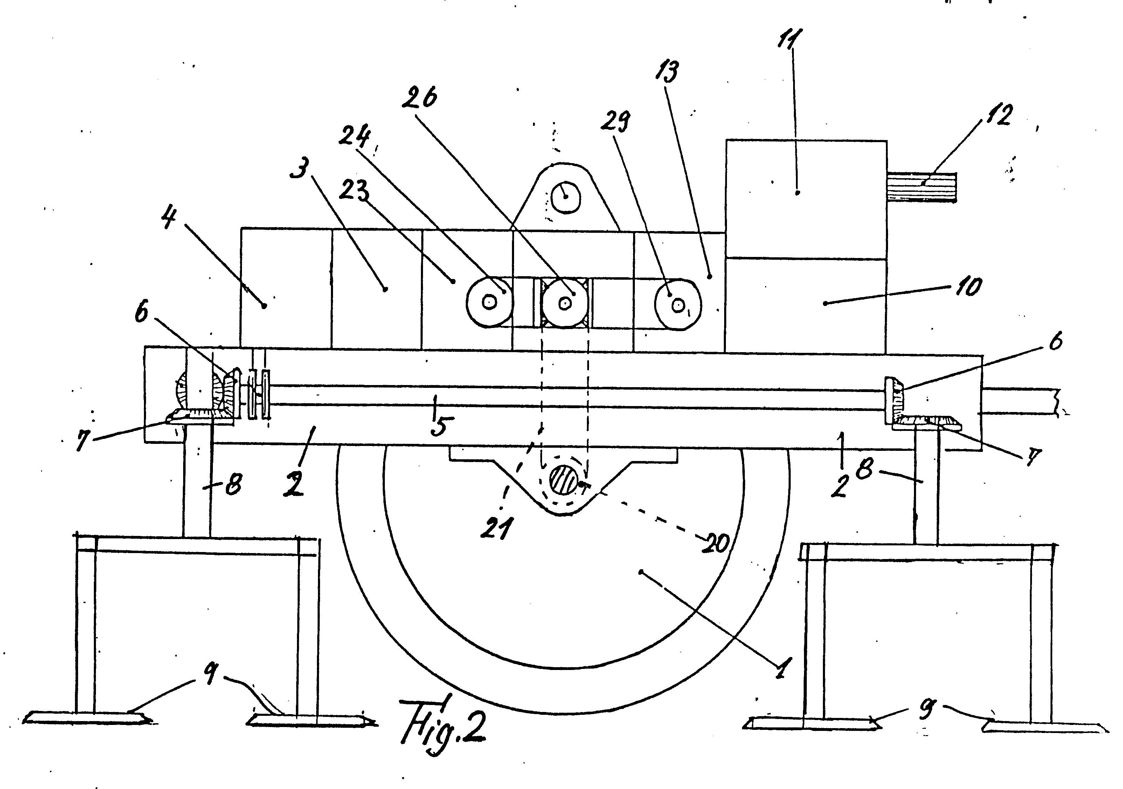

Figur 2 eine Seitenansicht, gesehen von der Linie II-II der Figur 1,

Figur 3 das zur Anwendung kommende Differentialgetriebe im waagerechten vergrößerten Schnitt.

Die Hackmaschine besteht aus einem von Laufrädern 1 abgestützten Rahmen 2. Auf dem Rahmen 2 ist ein Ölmotor 3 gelagert, der über ein Schaltgetriebe 4 Kettenräder und Ketten eine in Längsrichtung gelagerte Welle 5 antreibt, die an ihren Enden über Kegelräder 6,7 zwei senkrechte Wellen 8 gegenläufig antreibt. Die Wellen 8 sind mit ihrem Abstand auf einen oder mehrere Pflanzabstände in den Pflanzreihen eingestellt und je mit einem Paar Hackmesser 9 versehen. Der Ölmotor 3 wird von einer aus einem Ölvorrat 10 mit Drucköl gespeisten, von der Zapfwelle 12 eines Schleppers angetriebenen Ölpumpe 11 betrieben, wobei die Speisung des Ölmotors 3 mit Drucköl über ein Regelventil 13 erfolgt.

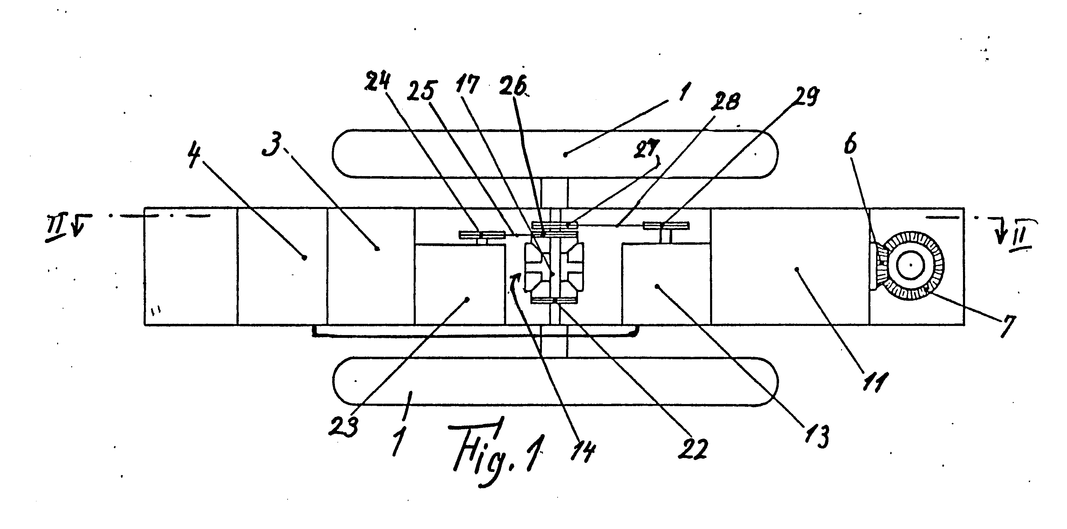

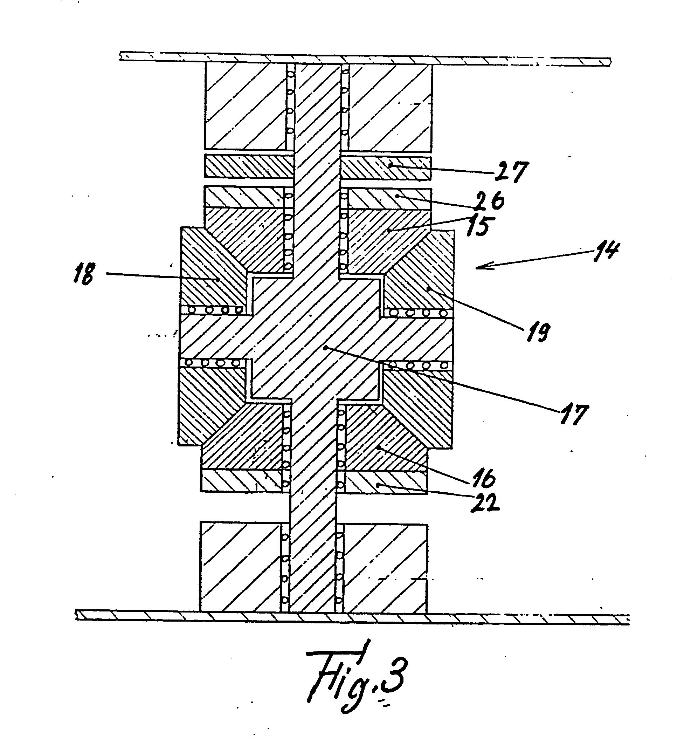

Für die Hackmaschine ist zwischen dem Laufrad 1 und dem Antrieb der Wellen 8, der Hackmesser 9 durch den Ölmotor 3 ein Differentialgetriebe 14 mit folgenden Merkmalen geschaltet. Die beiden Kegelräder 15 und 16, als Tellerräder, sitzen frei drehbar auf einer gemeinsamen im Rahmen 2 gelagerten Welle 17 (Figur 1 und 3). Die Welle 17 trägt die beiden radialen Drehzapfen der beiden frei drehenden Ausgleichsräder 18 und 19. Das Tellerrad 16 wird durch ein auf der Achse eines der Laufräder 1 auf der einen Seite des Rahmens 2 befestigtes Kettenrad 20 über eine Kette 21 und das mit dem Tellerrad 16 (zweites Tellerrad) verbundene Kettenrad 22 in Umdrehung versetzt. Das Tellerrad 15 (erstes Tellerrad) wird mit gleicher, aber umgekehrter Drehzahl durch den Ölmotor 3 über ein Untersetzungsgetriebe 23, ein Kettenrad 24, eine Kette 25 und ein Ketten rad 26 angetrieben, so daß damit die Ausgleichsräder 18, 19 im normalen Hackbetrieb bei gezogener Hackmaschine nicht um die Achse der Welle 17 drehen.

Sowie sich für die Hackmesser die Bodenart ändert oder sonstige Hindernisse auftreten, wird rückwirkend die Drehzahl des Ölmotors 3 positiv oder negativ beeinflußt, und daher muß der Ölmotor 3 durch Änderung seiner Leistung wieder auf seine normale Drehzahl gebracht werden.

Um dies zu erreichen, ist auf der Welle 17 der Tellerräder 15, 16 ein Zahnrad 27 befestigt, welches über eine Kette 28 ein Kettenrad 29 antreibt, welches ein Organ des Steuerventils 13 zur Erweiterung oder Verengung des Drucköldurchlaufes zum Ölmotor 3 steuert.

Erhöht sich z.B. die von den Hackmessern 9 auszuübende Arbeitsleistung, so führt dies zu einem Abnehmen der Drehzahl des Ölmotors 3 und dadurch wird auch die Drehzahl des Tellerrades 15 geändert. Die damit auftretende Drehzahldifferenz zwischen den Tellerrädern 15 und 16 führt zu einer Winkelverdrehung der Ausgleichsräder 18,19 mit der Welle 17, die damit das Kettenrad 27 verdreht. Diese Verdrehung wird über das Kettenrad 29 auf das Regelventil 13 übertragen, welches sich weiter öffnet und damit den Ölmotor 3 mit mehr Drucköl beschickt, so daß dieser wieder auf seine ursprünglich eingestellte Drehzahl zurückgelangt. Dies führt wieder zu einer entsprechenden Drehzahl der Hackmesser, so daß durch das Differentialgetriebe und dessen Regelfunktion eine immer erfolgende Hackanpassung an die Laufgeschwindigkeit der Hackmaschine erfolgt.

**Ansprüche**

1. Hackmaschine für Hackfrüchte, die von einem Schlepper gezogen wird, mit rotierenden Hackmessern, einem unabhängigen Ölmotor zum Antrieb der Hackmesser, einem im Ölkreislauf des Motors liegenden Steuerventil und einem Regler, der von den Laufrädern der Hackmaschine angetrieben wird und der in Abhängigkeit von der Fahrgeschwindigkeit der Maschine die Öffnungsweite des Steuerventils bestimmt, dadurch gekennzeichnet, daß als Regler ein Differentialgetriebe (14) mit zwei sich gegenüberliegenden Tellerrädern (15,16) vorgesehen ist, welche frei drehbar auf einer die zugehörigen Ausgleichsräder (18,19) tragenden Welle (17) sitzen, wobei das eine Tellerrad (15) von den Laufrädern der Maschine um das andere Tellerrad (16) mit gleicher Drehzahl, aber in umgekehrter Richtung vom Ölmotor (3) angetrieben wird und die die Ausgleichsräder tragende Welle (17) mit dem Steuerventil (13) in Antriebsverbindung steht.

2. Hackmaschine nach Anspruch 1, dadurch gekennzeichnet, daß die Ausgleichsräder (18,19) auf sich radial von der Welle (17) wegerstreckende Drehzapfen gelagert sind.

3. Hackmaschine nach Anspruch 1 oder 2, dadurch gekennzeichnet, daß an den beiden Tellerrädern (15,16) und an der die Ausgleichsräder (18,19) tragenden Welle (17) je ein Kettenrad (22,26,27) befestigt ist.

4. Hackmaschine nach einem der Ansprüche 1 bis 3, dadurch gekennzeichnet, daß zwischen dem Ölmotor (3) und dem Differentialgetriebe (14) ein Untersetzungsgetriebe (23) vorgesehen ist.

5. Hackmaschine nach einem der Ansprüche 1 bis 4, dadurch gekennzeichnet, daß die Ölpumpe (3) von der Zapfwelle des Schleppers antreibbar ist.

Fig. 1

Fig.2

0 271 756

Fig.3

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | DE-B-1 262 661 (FÄHSE & CO.) * Insgesamt * | 1 | A 01 B 41/04 |
| Y | GB-A-1 503 410 (ARMYTAGE BROS LTD) * Insgesamt * | 1 | |
| A | | 2 | |
| D,A | FR-A- 967 149 (BUCHER-GUYER) | | |
| A | FR-A-1 578 878 (IAN NICKOLS LTD) | | |
| A | FR-A-2 460 425 (PLACE) | | |
| A | CH-A- 396 552 (DELMA) | | |
| A | FR-A-1 191 352 (HYDREL AG) | | |

RECHERCHIERTE SACHGEBIETE (Int. Cl.4)

A 01 B
F 16 H

Der vorliegende Recherchenbericht wurde für alle Patentansprüche erstellt

| Recherchenort | Abschlußdatum der Recherche | Prüfer |
|---|---|---|
| DEN HAAG | 03-03-1988 | VERDOODT S.J.M. |